# EUROPEAN PATENT APPLICATION

(11) **EP 3 885 917 A1**
(43) Date of publication of application: **29.09.2021**
(21) Application number: 20166077.6
(22) Date of filing: 26.03.2020
(51) Int. Cl.: G06F 11/34

(54) **METHOD AND APPARATUS FOR MONITORING USAGE OF AT LEAST ONE APPLICATION EXECUTED WITHIN AN OPERATING SYSTEM**

(71) Applicant: THOMSON LICENSING, 35510 Cesson-Sévigné (FR)
(72) Inventor: DAUVIN, Laurent, 35576 Cesson-Sevigné (FR); MORILLON, Gilles, 35576 Cesson-Sevigné (FR); FRALEU, Sébastien, 35576 Cesson-Sevigné (FR); JOLLIVET, Christophe, 35576 Cesson-Sevigné (FR)
(74) Representative: Vidon Brevets & Stratégie

(57) **Abstract**

The present disclosure is directed towards an apparatus and method for monitoring usage of applications executed within an operating system of an electronic device (40). The apparatus and method are implemented using a monitoring application different from the monitored applications and aims at providing not only information regarding applications usage time, but also information regarding how some of the monitored applications are used. The monitoring application utilizes a trained model to acquired information regarding the monitored applications.

## Description

### Field of the invention

The present disclosure relates generally to the field of data analytics. More particularly, the present disclosure relates to a method for monitoring usage of applications executed within an operating system of an electronic device.

### Background

The present section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Gathering customer information from the field is crucial for operators (e.g., Internet service providers, phone operators, and the like) to be proactive and enhance customer experience. More particularly, it is of interest for an operator to collect information regarding which applications are mainly used on an electronic device (e.g., a smartphone, a set-top box, or the like), how long they are used, and how they are used. Such data must be anonymized, but still information can be inferred in a larger scale.

Obtaining such information, however, usually turns out to be quite difficult.

Indeed, although some applications may implement in their own code their own analytics solutions to allow a user to monitor their usage, no direct information is usually made available outside these applications. In addition, many applications do not implement such analytics solution at all. Furthermore, the operators usually don't have control on the applications that are installed on an electronic device.

Some operating systems provide means for obtaining some information regarding applications usage. However, information obtained is usually fragmented and limited. For example, the Android® operating system provides a native usage statistics Application Programming Interface ("API"), that can be called to obtain a history regarding whether applications have been put in system foreground or in system background, with corresponding timestamps. Yet, no information regarding how an application is used can be directly inferred from such an API. For example, considering an application delivering video content, it would be of interest to differentiate the time really dedicated to watch videos versus the time spent to browse the video catalogue provided by the application.

It would therefore be desirable to provide a technique that would avoid at least some of these drawbacks, and that would notably allow monitoring applications in a more accurate way.

### Summary

The present disclosure concerns a method for monitoring usage of at least one application executed within an operating system of an electronic device, the method being implemented by a monitoring application different from the at least one application, wherein the method includes upon detection of an input on input control interface or a input control interface of the electronic device at least one iteration of:
acquiring a screenshot of a menu screen currently displayed by the monitored application,
delivering a consolidated set of data obtained from the screenshot including a type of menu screen of the currently displayed menu screen, data retrieved from at least one data field identified based on the type of menu screen of the currently displayed menu screen.

The present disclosure is also directed towards a method for training a model capable of determining, based on a screenshot of a menu screen of at least one application whose usage is to be monitored, a type of screen of the menu screen and of identifying at least one data field identified based on the type of screen of the menu screen, the training method including :
determining at least one generic layout of at least data field corresponding to a type of menu screen, based on at least one layout of at least one data field of the at least one menu screen,
delivering a data-structure including of a given type of menu screen a list of data fields identifying the type of menu screen.

Another object described in the present disclosure is an electronic device embedding a monitoring application capable of monitoring usage of at least one application executed within an operating system of the electronic device, the electronic device including at least one processor configured to, upon detection of an input on a input control interface or input control interface of the electronic device:
acquire a screenshot of a menu screen currently displayed by the monitored application,
deliver a consolidated set of data obtained from the screenshot including a type of menu screen of the currently displayed menu screen, data retrieved from at least one data field identified based on the type of menu screen of the currently displayed menu screen.

Some processes implemented by elements of the disclosure may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as a "circuit", "module" or "system'. Furthermore, such elements may take the form of a computer program product embodied in any tangible medium of expression having computer usable program code embodied in the medium.

Since elements of the present disclosure can be implemented in software, the present disclosure can be embodied as computer readable code for provision to a programmable apparatus on any suitable carrier medium. A tangible carrier medium may include a storage medium such as a floppy disk, a CD-ROM, a hard disk drive, a magnetic tape device or a solid-state memory device and the like. A transient carrier medium may include a signal such as an electrical signal, an electronic signal, an optical signal, an acoustic signal, a magnetic signal or an electromagnetic signal, e.g. a microwave or Radio-Frequency("RF") signal.

### Brief description of the drawings

The present disclosure can be better understood with reference to the following description and drawings, given by way of example and not limiting the scope of protection, and in which:
**Figure 1** is a flow chart of a method for monitoring usage of at least one application executed within an operating system of an electronic device according to an embodiment of the present disclosure;
**Figure 2** represents a menu screen displayed by the monitored application;
**Figure 3** is a flow chart of a method for training a model according to an embodiment of the present disclosure; and
**Figure 4** is a schematic block diagram illustrating an example of electronic device capable of running the method for monitoring an application.

The components in the figures are not necessarily to scale, emphasis instead being placed upon illustrating the principles of the disclosure.

### Detailed description

The present disclosure relates to a method that allows monitoring usage of applications executed within an operating system of an electronic device. The method is implemented by a monitoring application different from the applications to monitor, and aims at providing not only information regarding applications usage time, but also information regarding how some of the monitored applications are used. By monitoring, it is thus understood here to provide a way to detect some usage of the applications executed within the operating system, from outside these applications. More particularly, the proposed technique is directed towards determining application usage time (i.e. detecting when an application is opened and closed), and, as for applications allowing to play video (such as YouTube, Netflix, etc.) the time dedicated to watch video versus the time dedicated to browse a video catalogue.

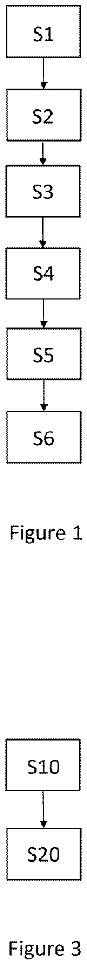

**Figure 1** is a flow chart of a method for monitoring usage of at least one application executed within an operating system of an electronic device, according to an embodiment of the present disclosure. According to a particular feature, the method is implemented by a monitoring application which takes the form of a system application running at the top level of the operating system, as a background service. The electronic device may be any device embedding an operating system, such as for example a smartphone, a tablet, a computer, a game console, a head-mounted display, a set-top-box, etc. The operating system (e.g. Windows, MacOS, Android, IOS, etc.) provides an environment allowing various applications to be executed on the electronic device. These applications may be pre-installed applications, or applications installed by the user of the electronic device after its purchase.

In a first step S1, the monitoring application detects that an application to be monitored, e.g. an application called Vueflix, is launched on the electronic device.

In a step S2, upon detection of an input on a input control interface of the electronic device, the monitoring application acquires a screenshot of a menu screen currently displayed by the monitored application on a display device.

A screenshot is a digital image representing the menu screen currently displayed by the monitored application. The electronic device includes a screen buffer that stores data related to the menu screen that is currently displayed on the display device. The data are values associated with each pixel of the display device that represent, for example, a color as well as an intensity of a pixel. Acquiring a screenshot consists in copying and storing these data related to the menu screen that is currently displayed into a file such as a RAW, PNG or JPEG file.

The screen buffer may be implemented as a hardware buffer or as a software buffer.

The input control interface of the electronic device can be a mouse, a keypad, a remote-control unit, a controller, a touch screen, etc. depending on the type of electronic device. In the following example, the electronic device is considered to be a set-top-box connected to a display device and controlled by means of a remote-control unit.

An input on the input control interface of the electronic device is for example a validation key or gesture, an action on a play/pause area of the input control interface, an action on a fast-forward/rewind area of the input control interface, an action of a stop area of the input control interface, an action on a cursor movement area of the input control interface, etc.

The input triggering the acquisition of a screenshot of a menu screen currently displayed by the monitored application can depend on the type of menu screen currently displayed.

The monitoring application detects an interaction at the monitored application level. This detection is for example carried out by acquiring one or all of a buffer memory within which the actions performed by the user on the input control interface of the monitored application are stored. These actions may indeed be temporarily stored by one or more operating system drivers, which interact, for example with the operating system, so that the operating system can process or transmit actions, in particular from the input control interface.

The operating system notifies the monitored application of the occurrence of an event and/or a user action by, for example, using this buffer memory. The monitored application may also have direct access to this buffer memory, in other systems. Anyway, cleverly, the monitoring application also monitors this buffer. When it detects an event or a user action intended for the monitored application, for example, it temporarily copies or duplicates this action in a dedicated buffer or temporary memory. The monitoring application optionally performs a filtering of actions or events, according to filtering parameters (for example if the action is a pitch and zoom, or a brightness change action, or other actions, they can be excluded from actions deemed representative or important and therefore for which a screenshot is performed). When the action or event is an event that should generate a screenshot, the monitoring application makes a copy of a buffer representative of the display that the monitored application displays on the screen. Such copy may consist in duplicating the content of the video memory, in another location of the memory of the device. This buffer copy may for example be made in a separate memory area which is under the control of the monitoring application. This copy can be modified, if necessary, to keep only areas of interest. After this possible modification, the screenshot is saved, possibly associated with the event or action at the origin of this screenshot and possibly timestamped, so as to further electronically analyze actions made by user.

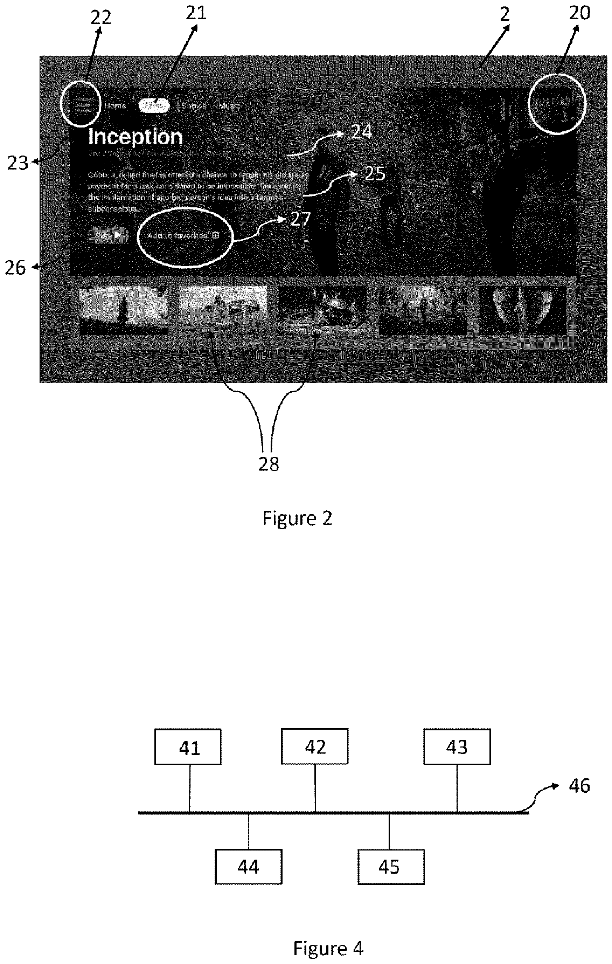

An example of a menu screen displayed by the monitored application is represented on **figure 2****.** Such a menu screen 2 includes a plurality of data field 20-28. The data fields include either text-information or icons whose selection by means of the input control interface, e.g. by pressing one or more cursor movement keys on the remote-control unit, followed by a validation gesture triggers a specific action.

In a step S3, the screenshot acquired during step S2 is timestamped. This step may be optional.

Then, in step S4, the screenshot is analyzed by means of a process for monitoring application, which may for example use one or several "trained model". As a function of the implementations, the trained model itself can directly implement all or part of the process for monitoring application, depending for example on whether the "trained model" is/are directly executable or has/have to be used as parameters or modules in the process for monitoring application. Several trained model may be used depending of the implementation, and may deliver results as a function of data which are provided to the trained model by the process for monitoring application, the data including the screenshot or screenshots (which may be timestamped so as to provide a set of screenshots).

The process of the monitoring application is thus capable of determining a type of menu screen of the currently displayed menu screen 2 and of retrieving data from at least one data field 20-28 included in the menu screen, and may, for accomplishing these tasks, use one or several trained model. A trained model is built during a learning phase, and is for example embedded or loaded in the electronic device once its training is complete. Specific trained model may for example be dynamically loaded from a network, or retrieved in a storage area of the electronic device by the monitoring application, as a function of previous results in analysing a screenshot. For example, a first information may be obtained from a first trained model, the first information is analysed by the process of the monitoring application, which identifies a need for a new trained model, which is then obtained so as to further analyse the screenshot. Some implementation may use one trained model which is divided in sub-models, which are obtained depending on analysing needs.

The analysis of the screenshot consists in identifying which application is currently monitored by the monitoring application, and its type, i.e. video streaming, audio streaming, VoD (Video-on-Demand), etc.

In order to identify the monitored application, the process for monitoring application, with the use of a trained model, can compare a layout of the menu screen with layouts of different types of menu screens gathered during the learning phase. For example, it is determined that the name of the monitored application is embedded in data field 20 of the screen menu 2. The text corresponding to the name, in the example "Vueflix", of the monitored application is extracted from the data field 20 by means of an OCR ("Optical Character Recognition") algorithm. Based on the name of the monitored application, the process for monitoring application, with the trained model, is capable of determining the type of the monitored application. Here, Vueflix is a multimedia streaming application that streams both video contents and music contents.

Once the monitored application is identified, the trained model (and/or the process for monitoring application which may use a trained model) identifies the type of screen menu acquired in the screenshot. A comparison of a layout of the menu screen with all the layouts of different types of menu screens gathered during the learning phase can be made. In the case the monitored application is identified, there may not have any need to compare the layout with all layouts. In another situation, where the monitored application is identified, the process for monitoring application can compare the menu screen to a set of layouts of different types of menu screens corresponding to menu screens of the monitored application.

Each type of menu screen is identified by a specific layout. Figure 2 represents a content screen of Vueflix. Such a view screen is identified by its nine data fields 20-28 and their layout on the screen, e.g. their coordinates (location, position) on the screen, their color background, the character policy, etc.

Other types of menu screens may include, but are not limited to, welcome screens, search screens, content screens, catalog screens, displaying screens, and the like.

For each type of menu screen, the process for monitoring application, and/or one or several trained model can store, or have access to, a number of data fields included in menu screens of this type along with information about these data fields such as their geographical coordinates on the screen, their color background, the character policy, etc.

In order to identify type of screen menu acquired in the screenshot, the process for monitoring application can compare, using a trained model, the layout of the menu screen to be identified, i.e. the screen coordinates (positions, locations) of the data fields 20-28, their color background, the character policy, etc. with the layouts of different types of menu screens based on a data fields for a given type of menu screen, their geographical coordinates on the screen, their color background, the character policy, etc.

Once the type of screen is identified, the process for monitoring application identifies the data fields actually included in the menu screen which is analyzed. Some menu screens can include more data fields or less data fields than a generic layout for the type of menu screen.

Then, the process for monitoring application extracts data from the identified data screens either by means of an OCR algorithm or by an image detection algorithm when the data stored in a data field is a thumbnail such as data field 28 or an icon such as data field 26.

Typically, the process for monitoring application, thru the use of a trained model, may retrieve information such as:
- the type of screen menu,
- the type of content viewed or accessed by a user of the electronic device, e.g. movie, music, show, documentary, etc.
- the content name,
- other content information such as the kind of movie (sci-fi, horror, drama, etc) or the kind of music (country, hardrock, pop, etc.), the name of actors, of the director, the artist, a pitch of the movie,
- whether the user has bookmarked the content or not,
- whether the content is streamed or downloaded,
- when the content is played, whether the user stopped the playing or not, if yes, when the stopping occurred, did the user resumed the playing or not, etc.

All the information gathered by the trained model, or the use of the trained model in the process for monitoring application is stored in a consolidated set of data in a step S5.

In a first embodiment of the method for monitoring an application, a consolidated set of data is generated for each screenshot acquired by the monitoring application. Such a consolidated set of data includes, for example, the name and type of the monitored application, the type of menu screen currently displayed by the monitored application, the different data fields actually included in the menu screen along with their associated data.

In a second embodiment of the method for monitoring an application, a global consolidated set of data is generated. Such a global consolidated set of data includes information gathered from all the screenshots acquired by the monitoring application during the time the monitored application is running. In the global consolidated set of data, the information is stored chronologically, i.e. in the chronological order in which the screenshots are acquired.

The global consolidated set of data includes for each screenshot, for example, the name and type of the monitored application, the type of menu screen currently displayed by the monitored application, the different data fields actually included in the menu screen long with their associated data.

By chronologically analysing the different screenshots acquired during the execution of the monitored application, it possible to improve the accuracy of the collected information.

Furthermore, the method for monitoring gathers information about a duration of a session of the monitored application, i.e. how long the monitored application has been running, as well as the time spent by a user running certain functions such as browsing content, etc.

In a step S6, the consolidated set of data is transmitting to a remote electronic device for data processing. The remote electronic device is for example a remote server of an internet service provider managing the electronic device.

In the first embodiment of the method for monitoring, the consolidated set of data is transmitted for each screenshot. In this first embodiment a small amount of data is transmitted periodically to the remote electronic device.

In the second embodiment of the method for monitoring, the global consolidated set of data is transmitted upon detection of a shutting down of the monitored application.

Such a method for monitoring enables a more accurate monitoring of an application and allows the gathering of useful and valuable data concerning the usage of a monitored application.

Acquiring a screenshot of a menu screen currently displayed by the monitored application each time an input on the input control interface of the electronic device is detected gives an account of the usage of the monitored application by the user. Indeed, each action of the user on the input control interface of the electronic device triggers the acquisition of a screenshot of a screen currently displayed by the monitored application which includes data representative of a choice made by the user.

Thus, by analysing the different screenshots acquired during the execution of the monitored application, it possible to accurately determine how a user uses the application.

**Figure 3** is a flow chart of a method for training a model, delivering a trained model, the method for training a model being capable of determining, based on a screenshot of a menu screen of at least one application whose usage is to be monitored, a type of screen of the menu screen and of identifying at least one data field identified based on the type of screen of the menu screen according to an embodiment of the present disclosure.

In a step S10 at least one generic layout corresponding to a type of menu screen is determined.

In a first embodiment of the method for training a model, a layout analysis is performed. A layout analysis is a process capable of identifying and categorizing regions of interest of an image, such as data fields. The image, e.g. a screenshot of a menu screen, is segmented in textual zones and non-textual zones. These zones, textual and non-textual, are then arranged in their reading order.

Once these zones are ordered, the different regions of interest identified are labelled as text body, icons, thumbnails, etc.

During step S10, a plurality of screenshots of menu screens are provided to a learning engine. Once the screenshots undergo layout analysis, their layouts are compared in order to find similarities among them such as a number of data fields included in a menu screen along with information about these data fields such as their coordinates (location, position) on the screen, their color background, the character policy, etc. As a result of these comparisons, different generic layouts are identified corresponding to different types of menu screens. A generic layout is associated with a number of data fields, their geographical coordinates and their label.

In a second embodiment of the method for training a model, for each application to be monitored a guided learning is performed.

As an input, the learning engine is provided with a screenshot of all the menu screens that can be displayed during the execution of the application. Each screenshot provided is identified and labelled with a type: welcome screen, search screen, etc.

Then, for each type of menu screen, the learning engine is provided with a list of data fields that are included in the menu screen.

Each data field is associated with a type, such as text, picture, icon, etc., with its coordinates (location, position) in the menu screen and information about a category of data included in the data field that is to be extracted, such as content title, content pitch, casting, etc. Other information relative to the data fields are provide to the learning engine such as, but not limited to, the colour background of the data field, the character policy, and the like.

The result of the learning phase is a set of key data fields that uniquely defines the layout of each type of menu screen.

For example, the welcome screen of Vueflix is defined by a data field located in the upper right corner of the screen, with Vueflix written in red and a data field located on the bottom side of screen which is a list of thumbnails.

In a step S20, a data-structure including of a given type of menu screen a list of data fields identifying the type of menu screen is delivered and the training of the model is complete, thus delivering one or several trained models and/or submodels, as a function of the implementation.

**Figure 4** is a schematic block diagram illustrating an example of an electronic device 40 capable of running the method for monitoring an application.

The electronic device can include at least one hardware processor 41, a storage unit 42, an input device 43, a display device 44, and an interface unit 45 which are connected by a bus 46. Of course, constituent elements of the electronic device may be connected by a connection other than a bus connection.

The processor 41 controls operations of the electronic device. The storage unit 42 stores at least one program capable of monitoring an application to be executed by the processor 41, and various data, such as parameters used by computations performed by the processor 41, intermediate data of computations performed by the processor 41, and so on. The processor 41 may be formed by any known and suitable hardware, or software, or a combination of hardware and software. For example, the processor 41 may be formed by dedicated hardware such as a processing circuit, or by a programmable processing unit such as a Central Processing Unit ("CPU") that executes a program stored in a memory thereof.

The storage unit 42 may be any suitable storage or means capable of storing the program, data, or the like in a computer-readable manner. Examples of the storage unit 42 include non-transitory computer-readable storage media such as semiconductor memory devices, and magnetic, optical, or magneto-optical recording media loaded into a read and write unit. The program causes the processor 41 to perform a process of monitoring an application according to an embodiment of the present disclosure as described with reference to figure 1.

The input device 43 may be formed by a keyboard, a pointing device such as a mouse, a remote-control unit, or the like for use by the user to input commands, to make selections, and the like during the execution of the monitored application. The display device 44 may be formed by a display device to display, for example, a Graphical User Interface (GUI). The input device 43 and the output device 44 may be integrated in a touchscreen panel, for example.

The interface unit 45 provides an interface between the electronic device and an external apparatus. The interface unit 45 may be communicable with the external apparatus via cable or wireless communication. In an embodiment, the external apparatus may be a display device when the electronic device does not embed a display unit 44.

It is important to note that the embodiments described herein are not necessarily intended to include mutually exclusive features or aspects of the present principles. Unless as otherwise indicated, any embodiments described herein or contemplated as a result of using the present principles may include any combination of the features described in any of the above embodiments.

Although embodiments which incorporate the teachings of the present disclosure have been shown and described in detail herein, those skilled in the art can readily devise many other varied embodiments that still incorporate these teachings. Having described preferred embodiments of a method and apparatus for monitoring usage of at least one application executed within an operating system (which are intended to be illustrative and not limiting), it is noted that modifications and variations can be made by persons skilled in the art in light of the above teachings. It is, therefore, to be understood that changes may be made in the particular embodiments of the disclosure disclosed which are within the scope of the disclosure as outlined by the appended claims.

## Claims

1. A method for monitoring usage of at least one application executed within an operating system of an electronic device (40), the method being implemented by a monitoring application different from the at least one application, **wherein,** the method comprises upon detection (S2) of an input on a input control interface of the electronic device at least one iteration of:
acquiring (S2) a screenshot of a menu screen (2) currently displayed by the monitored application; and
delivering (S5) a consolidated set of data obtained from the screenshot, the set of data including a type of menu screen corresponding to the currently displayed menu screen (2), and data retrieved from at least one data field (20-28) identified based on the type of menu screen corresponding to the currently displayed menu screen (2).

2. The method of claim 1 wherein the set of data is obtained by running (S4) a trained model on the screenshot, the trained model being capable of determining the type of menu screen of the currently displayed menu screen (2) and retrieving data from at least one data field (20-28) identified based on the type of menu screen of the currently displayed menu screen (2) from the screenshot.

3. The method of claim 1 further comprising timestamping (S3) the screenshot.

4. The method of claim 1 further comprising detecting (S1) the launch of the monitored application.

5. The method of claim 1 comprising transmitting (S6) the consolidated set of data to a remote electronic device for data processing.

6. The method of claim 5 wherein the consolidated set of data is transmitted for each iteration.

7. The method of claim 5 wherein the consolidated set of data is transmitted upon detection of a shutting down of the monitored application.

8. The method according to claim 1 wherein a type of screen of the currently displayed menu screen (2) belongs to a group comprising a welcome screen, a catalogue screen, a search screen, and a content screen.

9. The method according to claim 1 wherein a data field (20-28) identified based on the type of screen of the currently displayed menu screen (2) belongs to a group comprising a content name, a content type, actors' names, and a content display duration.

10. A computer program **characterized in that** it comprises program code instructions for the implementation of the method according to claims 1-9 when the program is executed by a processor.

11. A method for training a model capable of determining, based on a screenshot of a menu screen (2) of at least one application whose usage is to be monitored, a type of screen of the menu screen (2) and identifying at least one data field (20-28) based on the type of screen of the menu screen (2), the training method comprising :
determining (S10) at least one generic layout corresponding to a type of menu screen based on at least one layout of the at least one menu screen (2); and
delivering (S20) a data-structure including a given type of menu screen and a list of data fields identifying the type of menu screen.

12. The method according to claim 11 wherein the at least one generic layout is associated with a type of menu screen.

13. The method according to claim 11 wherein the at least one generic layout is associated with a list comprising the at least one data field.

14. The method according to claim 13 wherein the list further comprises geometric coordinates of the at least one data field.

15. A computer program **characterized in that** it comprises program code instructions for the implementation of the method according to claims 11-14 when the program is executed by a processor.

16. An electronic device (40) embedding a monitoring application capable of monitoring usage of at least one application executed within an operating system of the electronic device, the electronic device comprising at least one processor configured to, upon detection of an input on a input control interface of the electronic device:
acquire a screenshot of a menu screen currently displayed by the monitored application; and
deliver a consolidated set of data obtained from the screenshot including a type of menu screen of the currently displayed menu screen, and data retrieved from at least one data field identified based on the type of menu screen of the currently displayed menu screen.
